# EUROPÄISCHE PATENTANMELDUNG

(11) **EP 1 134 434 A2**
(43) Veröffentlichungstag der Anmeldung: **19.09.2001**
(21) Anmeldenummer: 01810221.0
(22) Anmeldetag: 05.03.2001
(51) Int. Cl.: F16B 13/06

(54) **Spreizdübel**

(30) Priorität: 15.03.2000 DE 10012645
(71) Anmelder: HILTI Aktiengesellschaft, 9494 Schaan (LI)
(72) Erfinder: Wieser, Jürgen, 86916 Kaufering (DE)
(74) Vertreter: Wildi, Roland

(57) **Zusammenfassung**

Ein Befestigungselement für Ankerstangen (14) weist einen mit einer Axialbohrung (8) versehenen im wesentlichen zylinderförmigen Spreizkörper (1) und ein zumindest teilweise über seine Längserstreckung entgegen der Setzrichtung (S) sich verjüngendes, konisch ausgebildetes Spreizelement (2) auf. Das Spreizelement (2) ist unverlierbar am setzungsrichtungseitigen Endbereich des Spreizkörpers (1), sich teilweise in die Axialbohrung (8) erstreckend, angeordnet. Eine axial verlaufende, sich in Setzrichtung (S) verjüngende Bohrung (4) durchsetzt das Spreizelement (2), das zumindest zwei in Setzrichtung (S) offene Längsschlitze aufweist. Dadurch, dass der Durchmesser der in Setzrichtung (S) abgewandten Öffnung des Spreizelementes (2) zumindest der lichten Weite der Axialbohrung (8) entspricht, wird die Ankerstange (14) beim Einschieben in das Befestigungselement von selbst in Bezug auf das Spreizelement (2) zentriert.

## Beschreibung

Die Erfindung betrifft ein Befestigungselement für Ankerstangen, mit einem mit einer Axialbohrung versehenen im wesentlichen zylinderförmigen Spreizkörper und einem zumindest teilweise über seine Längserstreckung entgegen der Setzrichtung sich verjüngendem, konisch ausgebildeten Spreizelement, das unverlierbar am setzungsrichtungsseitigen Endbereich des Spreizkörpers, sich zumindest teilweise in die Axialbohrung erstreckend, angeordnet ist.

Befestigungselemente der obengenannten Art werden in der Weise verankert, dass das Spreizelement in den Spreizkörper hineingezogen wird, wobei sich der Spreizkörper entweder unmittelbar oder über eine Distanzhülse an einem Gegenlager einer Schraube abstützt. Das Spreizelement kann beispielsweise über eine Gewindeverbindung mit der Schraube verbunden sein.

Aus der DE 197 40 823 A1 ist ein Befestigungselement bekannt, das einen mit einer Axialbohrung versehenen, im wesentlichen zylinderförmigen Spreizkörper und ein zumindest teilweise über seine Längserstreckung entgegen der Setzrichtung sich verjüngendes, konisch ausgebildetes Spreizelement aufweist. Das Spreizelement setzt sich aus mehreren Spannsegmenten zusammen, die durch beispielsweise einen O-Ring radial elastisch aufweitbar zusammengehalten werden und teilweise in die Axialbohrung des Spreizkörpers ragen. Beim Einschieben einer zur Anwendung gelangenden, mit einer Aussenprofilierung versehenen Ankerstange weichen die Spannsegmente radial aus und werden durch den O-Ring elastisch an die Aussenfläche der Aussenprofilierung der Ankerstange gepresst. Bei Zugbelastung der zur Anwendung gelangenden Ankerstange, wird das aus den einzelnen Spannsegmenten bestehende Spreizelement entgegen der Setzrichtung weiter in den Spreizkörper hineingezogen. Dadurch, dass das Spreizelement in Setzrichtung verjüngend konisch ausgebildet ist, wird der Spreizkörper radial aufgeweitet.

Nachteilig bei dem bekannten Befestigungselement ist, dass die zur Anwendung gelangende Ankerstange in bezug auf das Spreizelement genau zentriert sein muss, damit sich die einzelnen Spannsegmente radial nach aussen bewegen. Ansonsten kommt es beispielsweise zu einem Verkippen des Spreizelementes, was ein Einführen der zur Anwendung gelangenden Ankerstange verunmöglicht und somit auch ein Verspreizen des Befestigungselementes verunmöglicht. Zudem müssen Durchmesser von Ankerstange und Spreizelement aufeinander abgestimmt sein, da ein zu weites Einrücken der Spannsegmente zum Zentrum hin, ein Einführen der Ankerstange behindert.

Ferner muss die mit dem bekannten Befestigungselement zur Anwendung gelangende Ankerstange eine Aussenprofilierung aufweisen, damit das Spreizelement eine genügend hoch belastbare Verbindung mit der zur Anwendung gelangenden Ankerstange aufweist.

Der vorliegenden Erfindung liegt die Aufgabe zugrunde, ein Befestigungselement für Ankerstangen zu schaffen, das die zur Anwendung gelangende Ankerstange beim Einschieben nicht behindert und selbst zentriert sowie zudem die zur Anwendung gelangende Ankerstange keine Aussenprofilierung aufweisen muss, um hohe Lastwerte sicherstellen zu können. Ausserdem soll das Befestigungselement einfach und wirtschaftlich herstellbar sein.

Erfindungsgemäss wird die Aufgabe dadurch gelöst, dass das Spreizelement eine axial verlaufende Bohrung sowie zumindest zwei in Setzrichtung offene Längsschlitze aufweist.

Dadurch, dass das Spreizelement einteilig ausgebildet ist, bleibt das Spreizelement auch im ungesetzten Zustand im Spreizkörper zentriert. Somit ist ein Einführen einer zur Anwendung gelangenden Ankerstange problemlos möglich. Mehrere, in Setzrichtung hin offen ausgebildete, auf dem Spreizelement angebrachte, Längsschlitze unterteilen das Spreizelement im setzungsseitigen Endbereich in mehrere elastische radial ausschwenkbare Segmente. Durch Einschieben der Ankerstange werden die an der Ankerstange anliegenden Segmente nach aussen gedrückt. Tritt nun eine Belastung der Ankerstange entgegen der Setzrichtung ein, so werden die Segmente des Spreizelementes gegen die Aussenfläche der Ankerstange gedrückt und erzeugen so einen Kraft- oder anders ausgedrückt einen Reibschluss zwischen Ankerstange und Spreizelement. Das Spreizelement wird durch die entgegen der Setzrichtung wirkende Kraft weiter in die Axialbohrung hineingezogen, was durch die konische Form des Spreizelementes zu einer radialen Aufweitung des Spreizkörpers führt. Die einteilige Ausführung des Spreizelementes hat den Vorteil einer einfachen Herstellung des Teiles und zudem eine Vereinfachung der Endmontage des erfindungsgemässen Befestigungselementes.

Die Bohrung verjüngt sich vorzugsweise in Setzrichtung. Beim Einschieben der Ankerstange verstärkt sich dadurch der radiale Druck die elastischen Segmente auf die eingeführte Ankerstange, da die einzelnen Segmente des Spreizelementes zu einer grösseren Schwenkbewegung gezwungen werden.

Bevorzugter Weise entspricht der Durchmesser der in Setzrichtung abgewandten Öffnung des Spreizelementes zumindest der lichten Weite der Axialbohrung. Somit wird die zur Anwendung gelangende Ankerstange beim Einschieben in das Spreizelement von selbst durch die Axialbohrung in Bezug auf das Spreizelement zentriert. Zweckmässigerweise ist der Durchmesser der Ankerstange geringer als der Durchmesser der Axialbohrung um ein Einführen überhaupt zu ermöglichen.

Vorteilhafterweise weist das Spreizelement am Aussenumfang zumindest eine in Setzrichtung wirkende Anschlagschulter auf, die mit einer am Spreizkörper angeordneten Gegenschulter zusammenwirkt, um einerseits eine Verliersicherung zu bilden und andererseits ein Herausgleiten des Spreizelementes beim Einschieben der Ankerstange zu verhindern. Die Ausbildung mittels Anschlagschultern und Gegenschultern gewährleistet zudem eine wirtschaftliche Herstellung. Im entgegen der Setzrichtung an die Anschlagschulter angrenzenden Bereich der Axialbohrung kann diese entgegen der Setzrichtung teilweise konisch verjüngt ausgebildet sein, um eine zusätzliche Verspreizung des Spreizkörpers im Bohrloch zu erzielen.

Die Bohrung weist vorzugsweise zumindest teilweise über deren Länge eine Innenprofilierung auf, um beispielsweise bei mit einer Aussenprofilierung zur Anwendung gelangenden Ankerstangen zusätzlich zum Kraftschluss einen Formschluss zu ermöglichen, was höhere Lastwerte zur Folge hat.

Zweckmässigerweise weist das Spreizelement im Bereich der Längsschlitze zumindest ein Gelenk auf, um dadurch die Eigenschaften der Schwenkbewegung der Segmente des Spreizelementes zu verbessern. Zudem ermöglicht die Ausbildung eines Gelenkes eine bessere Abstimmung zwischen dem Verlauf des Innendurchmessers der Bohrung und der Dimensionierung der Länge der Längsschlitze.

Das Gelenk ist vorzugsweise als eine Materialschwächung ausgebildet. Somit ist die Herstellung des Befestigungselements wirtschaftlich.

Bevorzugter Weise ist die Materialschwächung als eine auf der Wandung der Bohrung umlaufende Innennut ausgebildet, um eine wirtschaftliche Herstellung zu ermöglichen. Selbstverständlich kann die Materialschwächung beispielsweise auch durch die Verwendung eines Materials, das eine hohe Elastizität aufweist erreicht werden.

Der Spreizkörper und das Spreizelement sind vorzugsweise aus Kunststoff gefertigt, insbesondere mittels Spritzgussverfahren hergestellt, um einerseits eine wirtschaftliche Herstellung zu ermöglichen und andererseits eine andere Ausbildung des Gelenkes mittels elastischer Materialien zu ermöglichen.

Die Erfindung wird nachstehend anhand eines Ausführungsbeispieles näher erläutert. Es zeigen:
- Fig. 1: einen Querschnitt des erfindungsgemässen Befestigungselementes eingesetzt in eine Bohrung eines Untergrundes mit eingeführter Ankerstange; und
- Fig. 1a: das erfindungsgemässe Befestigungselement mit einer gesetzten Ankerstange
- Fig. 2: eine Seitenansicht des in Fig. 1 dargestellten Befestigungselementes.

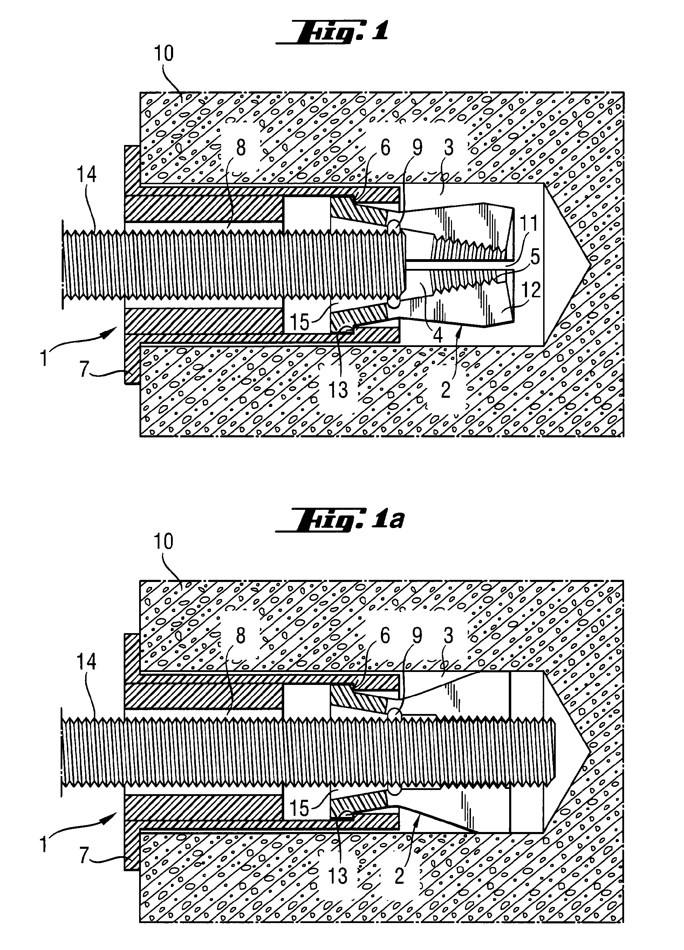

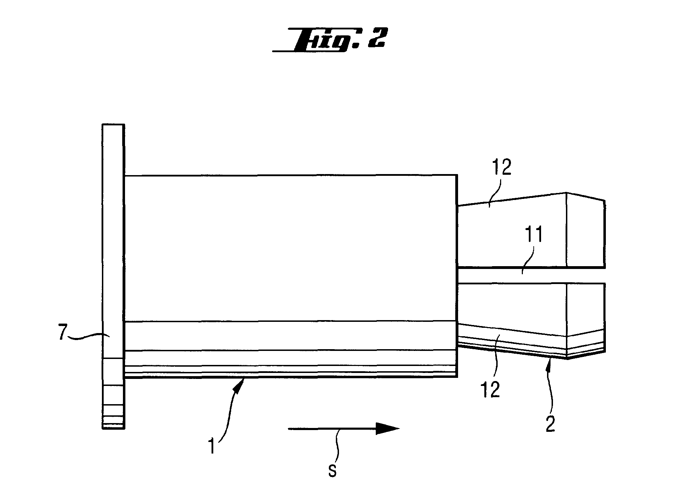

Das in Fig.1, 1a und 2 dargestellte Ausführungsbeispiel des erfindungsgemässen Befestigungselementes für Ankerstangen 14 weist einen zylinderförmigen, mit einer Axialbohrung 8 versehenen Spreizkörper 1 und ein teilweise sich in die Axialbohrung 8 erstreckendes Spreizelement 2 auf.

Das Spreizelement 2 weist in Setzrichtung S einen sich entgegen der Setzrichtung S verjüngenden konisch ausgebildeten Endbereich auf, an den sich entgegen der Setzrichtung S ein im wesentlichen zylinderförmig ausgebildeter Abschnitt anschliesst. Zentrisch im Spreizelement 2 angeordnet verläuft eine sich in Setzrichtung verjüngende Bohrung 4, die im setzrichtungsseitigen Endbereich eine Innenprofilierung 5 aufweist. Im der Setzrichtung S abgewandten Endbereich weist das Spreizelement 2 eine in Setzrichtung S wirkende Anschlagschulter 6 auf.

Der Spreizkörper 1 weist in Setzrichtung S abgewandten Endbereich einen Flansch 7 auf, der zur Festlegung der Setztiefe dient. Wie die Fig. 1 zeigt, stützt sich dazu der Flansch 7 an der Oberfläche eines mit einem Bohrloch 3 versehenen Untergrundes 10 ab. Im gegenüberliegenden Endbereich ist in der Axialbohrung 8 eine mit der Anschlagschulter 6 zusammenwirkende Gegenschulter 13 angeordnet, die ein Verschieben in Setzrichtung S des Spreizelementes 2 verhindert. Der Spreizkörper 1 umfasst mit seinem setzungsrichtungsseitigen Endbereich im wesentlichen den zylinderförmigen Abschnitt des Spreizelementes 2.

Das Spreizelement 2 weist im radialen Projektionsbereich des setzungsrichtungsseitigen Ende des Spreizkörpers 1 eine umlaufende Innennut 9 auf, die als Gelenk zwischen dem zylinderförmigen Abschnitt des Spreizelementes 2 und durch Längsschlitze 11 gebildete Segmente 12 wirkt. Ferner weist das Spreizelement 2 eine in Setzrichtung S abgewandte Öffnung 15 auf, deren Durchmesser grösser ist als die lichte Weite der Axialbohrung 8. Dadurch erfolgt beim Einführen einer Ankerstange 14, eine automatische Zentrierung der Ankerstange 14, in Bezug auf die Öffnung 15 des Spreizelementes 2.

Der Durchmesser der Bohrung 4 ist im setzrichtungsseitigen Bereich des Spreizelementes 2 kleiner als der Aussendurchmesser der Ankerstange 14. Hierdurch bewegt die in diesen Bereich vordringende Ankerstange 14 die Segmente 12 radial nach aussen um eine Schwenkachse, die durch die Innennnut 9 gebildet wird. Greift an der Ankerstange 14 eine Kraft an, die entgegen der Setzrichtung S wirkt, so werden die Segmente 12 an die Aussenfläche der Ankerstange 14 gedrückt und bilden somit einen Kraftschluss zwischen Spreizelement 2 und Ankerstange 14. Dadurch wird das Spreizelement 2 weiter entgegen der Setzrichtung S in die Axialbohrung 8 gezogen und bewirkt durch seine konischen Flächen ein radiales Aufweiten des Spreizkörpers 1, was für die Verankerung im Bohrloch 3 des Untergrundes 10 massgebend ist (Fig. 1a).

## Patentansprüche

1. Befestigungselement für Ankerstangen (14), mit einem mit einer Axialbohrung (8) versehenen im wesentlichen zylinderförmigen Spreizkörper (1) und einem zumindest teilweise über seine Längserstreckung entgegen der Setzrichtung (S) sich verjüngenden, konisch ausgebildeten Spreizelement (2), das unverlierbar am setzungsrichtungsseitigen Endbereich des Spreizkörpers (1), sich zumindest teilweise in die Axialbohrung (8) erstreckend, angeordnet ist, **dadurch gekennzeichnet, dass** das Spreizelement (2) eine axial verlaufende Bohrung (4) sowie zumindest zwei in Setzrichtung (S) offene Längsschlitze (11) aufweist.

2. Befestigungselement nach Anspruch 1, **dadurch gekennzeichnet, dass** sich die Bohrung (4) in Setzrichtung (S) verjüngt.

3. Befestigungselement nach Anspruch 1 oder 2, **dadurch gekennzeichnet, dass** der Durchmesser der in Setzrichtung (S) abgewandten Öffnung (15) des Spreizelementes (2) zumindest der lichten Weite der Axialbohrung (8) entspricht.

4. Befestigungselement nach einem der Ansprüche 1 bis 3, **dadurch gekennzeichnet, dass** das Spreizelement (2) am Aussenumfang zumindest eine, in Setzrichtung (S) wirkende Anschlagschulter (6) aufweist, die mit einer am Spreizkörper (1) angeordneten Gegenschulter (13) zusammenwirkt.

5. Befestigungselement nach einem der Ansprüche 1 bis 4, **dadurch gekennzeichnet, dass** die Bohrung (4) zumindest teilweise über deren Länge eine Innenprofilierung (5) aufweist.

6. Befestigungselement nach einem der Ansprüche 1 bis 5, **dadurch gekennzeichnet, dass** das Spreizelement (2) im Endbereich der Längsschlitze (11) zumindest ein Gelenk aufweist.

7. Befestigungselement nach Anspruch 6, **dadurch gekennzeichnet, dass** das Gelenk als eine Materialschwächung ausgebildet ist.

8. Befestigungselement nach Anspruch 7, **dadurch gekennzeichnet, dass** die Materialschwächung als eine auf der Wandung der Bohrung (4) umlaufende Innennut (9) ausgebildet ist.

9. Befestigungselement nach einem der Ansprüche 1 bis 8, **dadurch gekennzeichnet, dass** der Spreizkörper (1) und das Spreizelement (2) aus Kunststoff sind.
